# EUROPEAN PATENT SPECIFICATION

(11) **EP 0 813 351 B1**
(45) Date of publication and mention of the grant of the patent: **02.11.2006**
(21) Application number: 96115144.6
(22) Date of filing: 20.09.1996
(51) Int. Cl.: H04S 3/00

(54) **Sound generator synchronized with image display**
Mit einer Bildanzeige synchronisierter Tonerzeuger
Générateur de son synchronisé avec un affichage d'image

(30) Priority: 12.06.1996 JP 17430796; 22.08.1996 JP 24131296
(43) Date of publication of application: 17.12.1997
(73) Proprietor: Nintendo Co., Limited, Minami-ku, Kyoto (JP)
(72) Inventor: Shimizu, Hideaki c/o Nintendo Co., Ltd., Kyoto-shi, Kyoto-fu (JP)
(74) Representative: Altenburg, Udo

(56) References cited:
- EP-A- 0 616 312
- JP-A- 62 155 879
- PATENT ABSTRACTS OF JAPAN vol. 018, no. 334 (C-1216), 24 June 1994 (1994-06-24) & JP 06 079060 A (FUNAI ELECTRIC CO LTD), 22 March 1994 (1994-03-22)

## Description

### BACKGROUND OF THE INVENTION

### Field of the Invention

The present invention relates generally to a sound generator synchronized with image display, and more particularly, to a sound generator for generating sounds such as a sound effect or music having a three-dimensional extent on the basis of the direction, the distance, and the like between two objects displayed in an image processor such as a personal computer or a video game set.

### Background of the Invention

As a technique for generating stereo sounds, a technique disclosed in Japanese Patent Publication No. 9397/1985 (prior art 1) has been conventionally known. The prior art 1 is for outputting one audio signal as an analog signal as it is and outputting the audio signal as a delayed analog signal, to produce stereo sounds.

However, the prior art 1 cannot be applied to a digital sound source because the analog signal is delayed. Moreover, in the prior art 1, the moving state of an object or a character displayed on a screen of a CRT display or the like is not considered, whereby such sounds as to be synchronized with the movement of the object cannot be generated.

As a sound generator for generating two-dimensional sounds in relation to image display, a sound generator disclosed in Japanese Patent Laid-Open No. 155879/1987 (prior art 2) has been known. The prior art 2 is for controlling the sound volumes from left and right speakers as an airplane which is a moving object to be a sound source in a two-dimensional manner by gradually decreasing the sound volume from the speaker from which the airplane moves farther apart and gradually increasing the sound volume of the speaker to which the airplane moves closer.

In the prior art 2, however, the sound volume is only gradually decreased or increased as the moving object moves. Even if the sounds are heard as stereo sounds, therefore, tree-dimensional sound effects are not obtained. Further, a sound effect obtained by the prior art 2 is not suitable as a sound effect for a three-dimensional image display. The reason for this is that sound effects are obtained if sounds are generated in synchronization with the movement of a moving object which moves in a two-dimensional manner, for example, an airplane or an automobile, while three-dimensional sound effects cannot be obtained when a three-dimensional image is displayed, whereby the image display and the sound effects (or the presence) do not coincide with each other, producing an uncomfortable impression on a user. Further, when the prior art 2 is applied to a case where the user uses a headphone, right and left sounds are simultaneously transmitted to the right and left ears of the user, and the sound volumes of the right and left sounds only differ from each other, whereby such three-dimensional sound effects as to cause a delay between the right and left sounds are not obtained. In addition, when the difference between the sound volumes of the right and left sounds is extremely increased, a burden is imposed on the ears of the user, whereby the user is easily made to feel fatigue. It has been experimentally known that the use of the headphone for a long time causes a headache or the like.

When the sound volumes from the right and left speakers are controlled using the prior art 2, the sounds generated from the speakers are heard by the user while extending in every direction, whereby a slight time delay occurs between the sound generated from one of the right and left speakers and transmitted to the left or right ear of the user and the sound generated from the other speaker and transmitted to the right or left ear of the user, so that sound effects similar to these in delaying one of the sounds are slightly produced, while three-dimensional sound effects have not been obtained yet.

Furthermore, EP 0 616 312 A2 discloses a method and a system for generating sounds. The method allows sounds emanated by objects in a viewer-interactive, computer-generated graphic virtual world, and other virtual world sounds, to be reproduced using flexibly and automatically scheduled resources of a virtual world sound system. Sound system resources are allocated in accordance with priority values associated with sounds, sound-emanating objects or requests for sound channel allocation.

### SUMMARY OF THE INVENTION

Therefore, an object of the present invention is to provide a sound generator capable of generating three-dimensional sounds which are changed as a camera is moved in a case where a three-dimensional image as viewed from the camera is displayed.

Another object of the present invention is to provide a sound generator capable of reducing the fatigue of a user even when the user hears sounds using a headphone.

In order to attain the above-mentioned objects, the present invention provides a sound generator according to claim 1. Preferred embodiments are described in the dependent claims.

The present invention is directed to a sound generator for generating, in an image display device for displaying a three-dimensional image, sounds having a spatial extent corresponding to the three-dimensional image, which comprises a first sound generation section for generating a first sound, a second sound generation section for generating a second sound, a sound source data storage section for digitally storing sound source data, a temporary storage section for temporarily storing the sound source data read out from the sound source data storage section, a delay time calculation section for calculating, when the image display device displays a first display object so defined as to generate sounds, delay time on the basis of a direction to the first display object as viewed from the position of a predetermined viewpoint, a audio processing section for reading out the sound source data corresponding to the first display object from the sound source data storage section for each unit time, storing the sound source data in the temporary storage section and reading out the sound source data as a first sound source data, and reading out the sound source data stored in the temporary storage section as a second sound source data at timing delayed by the delay time calculated by the delay time calculation section from timing at which the first sound source data is read out, a first digital-to-analog conversion section for converting the first sound source data read out from the temporary storage section into an analog audio signal and feeding the analog audio signal to the first sound generation section, and a second digital-to-analog conversion section for converting the second sound source data read out from the temporary storage section into an analog audio signal and feeding the analog audio signal to the second sound generation section.

As described in the foregoing, according to the present invention, when the first display object is displayed on the three-dimensional image, the delay time between the first sound source data and the second sound source data is changed depending on the change of the direction to the first display object as viewed from the position of the predetermined viewpoint, whereby the sounds having a spatial extent corresponding to the change of the three-dimensional image can be generated from the first and second sound source generation sections. Since image display and sound effects coincide with each other in the present invention, therefore, a user can be made to feel image and sound effects closer to reality, whereby the interest of the user can be further improved. Further, when the user hears the sounds generated from the sound generator according to the present invention using a headphone stereo, the fatigue of the user can be reduced.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the construction of a sound generator according to a first embodiment of the present invention;
Fig. 2 is an illustration for explaining the principle in a case where the amounts of delay of left and right audio signals are varied on the basis of the positional relationship between a sound generating object and a camera;
Fig. 3 is a characteristic view showing the relationship between the sound volume and the direction in a case where the sound volume is controlled under the condition that there is no amount of delay;
Fig. 4 is a characteristic view showing the relationship between the direction and the sound volume in a case where under the condition that there is an amount of delay, the amount of delay is variably controlled;
Fig. 5 is a characteristic view showing the relationship between the distance and the sound volume in a case where the sound volume is controlled under the condition that there is an amount of delay;
Fig. 6 is a characteristic view in a case where the amount of delay is controlled in relation to the positional relationship between a sound generating object and a camera (a hero character);
Fig. 7 is a block diagram showing the construction of a sound generator according to a second embodiment of the present invention;
Fig. 8 is a diagram illustrating a memory space of a W-RAM shown in Fig. 7;
Fig. 9 is a diagram illustrating one example of a memory map of a sound memory area corresponding to a buffer memory shown in Fig. 1;
Fig. 10 is a diagram illustrating another example of a memory map of a sound memory area corresponding to a buffer memory shown in Fig. 1;
Fig. 11 is a flow chart showing schematic operations of a game;
Fig. 12 is a flow chart showing the details of a subroutine of audio output processing shown in Fig. 11;
Fig. 13 is a timing chart showing output of audio data in a case where there is no amount of delay;
Fig. 14 is a timing chart showing output of audio data in a case where there is an amount of delay, and the previous amount of delay and the current amount of delay are the same; and
Fig. 15 is a timing chart showing output of audio data in a case where there is an amount of delay, and the previous amount of delay and the current amount of delay are not the same.

### DESCRIPTION OF THE PREFERRED EMBODIMENTS

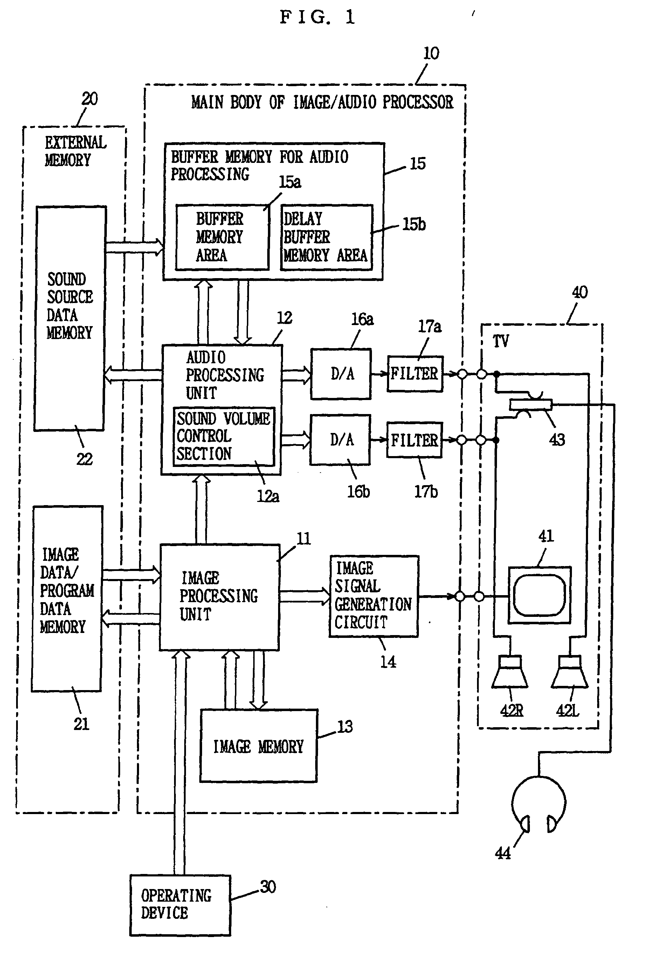

Fig. 1 is a block diagram showing the construction of a sound generator according to a first embodiment of the present invention. In Fig. 1, an image/audio processor (hereinafter referred to as a "processor") 10 is, for example, a video game set for generating images and sounds such as music and a sound effect for a game, and comprises an image processing unit 11 and a audio processing unit 12. An image memory 13 is connected to the image processing unit 11 through an address bus and a data bus. Further, an external memory 20 and an controller 30 are detachably connected to the image processing unit 11.

The image processing unit 11 performs an operation for image processing on the basis of data representing the operating state inputted from the controller 30, and image data and program data which are stored in an image data/program data memory 21 in the external memory 20, and feeds image display data generated by the operation to an image signal generation circuit 14. Specifically, the image processing unit 11 generates image display data for displaying one or a plurality of objects which generate sounds such as music and/or a sound effect of the game on the basis of programs (for example, a waterfall, a river, an animal, an automobile, an airplane, or the like) and an object which does not generate sounds (for example, a building, a plant, a road, a cloud, a scene, or the like) in a three-dimensional manner as the line of sight of a camera is moved. The camera is a virtual camera which is not displayed on a screen of a display device. An image projected on the virtual camera is displayed on the screen of the display device. Further, the line of sight of the camera is moved by the progress of the game, the operation of a player, and the like. When a hero character (for example, a human being or an animal) which changes in the direction of movement or the action (the movement of the hands and legs) according to the operation of the player is displayed on the screen, the line of sight of the camera may, in some cases, be moved in synchronization with the movement of the line of sight of the hero character.

The image signal generation circuit 14 generates an image signal with various synchronizing signals required to display an image by a CRT (Cathode Ray Cube) or a standard television receiver (hereinafter referred to as a "television") 40 which is one example of the display device on the basis of the image display data fed from the image processing unit 11, and feeds the image signal to the television 40, to display an image on a display screen (or a display section) 41.

Furthermore, the image processing nit 11 feeds to the audio processing unit 12 coordinate data (hereinafter referred to as "first coordinate data") of an object which generates sounds (hereinafter referred to as a "sound generating object") out of various display objects, coordinate data (hereinafter referred to as "second coordinate data") of the virtual camera (or the hero character), and data for designating the type of sound for the purpose of changing a sound effect such as the sound of water such as a waterfall or a river, the sound in running of an automobile, or the cry of an animal as the line of sight of the virtual camera is moved, that is, for the purpose of obtaining three-dimensional sound effects in synchronization with three-dimensional image display. The coordinate data fed to the audio processing unit 12 also includes Z coordinate data representing the depth direction in addition to X coordinate data representing the transverse direction of the screen and Y coordinate data representing the longitudinal direction of the screen.

A sound source data memory 22 included in the external memory 20 is detachably connected to the audio processing unit 12, and a buffer memory for audio processing (hereinafter referred to as a "buffer memory") 15 for temporarily storing sound source data is connected thereto through a data bus and an address bus.

The sound source data memory 22 stores a large amount of sound source data used for one game executed by programs in the external memory 20 in the form of PCM data or AD-PCM data.

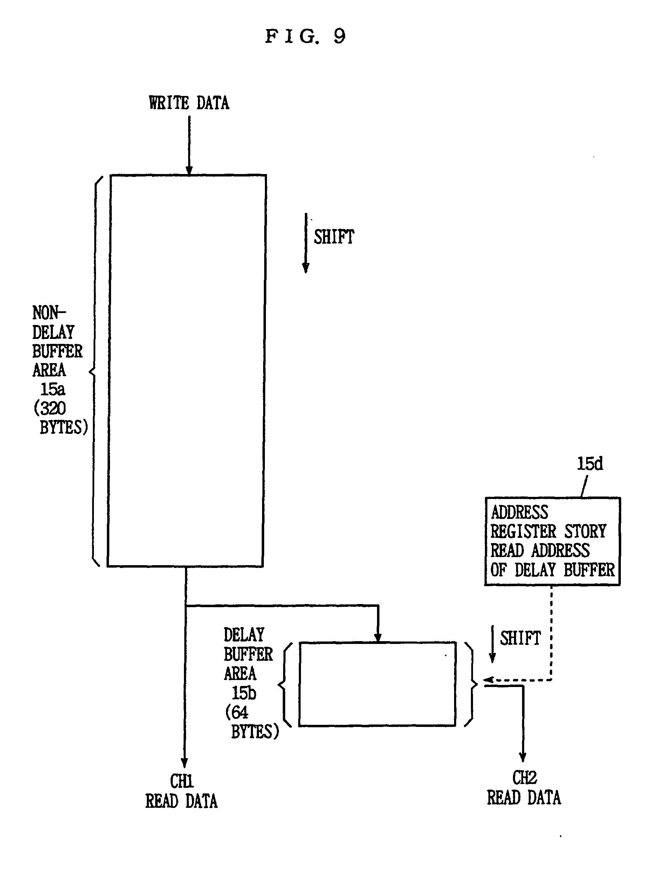

The buffer memory 15 includes a buffer area 15a and a delay buffer area 15b (see Fig. 9 showing the embodiment as described in detail later). The buffer area 15a temporarily stores audio data in order to generate a first audio signal which are not delayed in given unit time, which is hereinafter referred to as a non-delay buffer area. The delay buffer area 15b has a storage capacity corresponding to maximum delay time in order to generate a second audio signal which are delayed from the first audio signal by time corresponding to delay time operated on the basis of the distance and the direction between the coordinates of the sound generating object and the coordinates of the virtual camera (or the hero character).

In the present embodiment, if the maximum delay time is not less than one-fifth of the unit time, an unnatural impression is given when right and left sounds are heard, whereby the storage capacity of the delay buffer area 15b is selected as a storage capacity which is one-fifth of that of the non-delay buffer area 15a. For example, the non-delay buffer area 15a has 320 bytes as a storage capacity corresponding to the unit time, and the delay buffer area 15b has 64 bytes as a storage capacity corresponding to the maximum delay time. The unit processing time is determined by the relationship between a sampling frequency in a case where audio signals are sampled to produce audio data (for example, 32 KHz) and time corresponding to audio signals to be processed at one time (that is, time corresponding to the processing unit), and is set to 1/200 to 1/240 seconds in the present embodiment. The delay time of the second audio signal from the first audio signal is variably controlled depending on a direction to the sound generating object as viewed from the camera (or the hero character) or an amount of change between directions to the sound generating object as viewed from the camera in a case where the camera (or the hero character) is moved before and after the movement (or angles based on the directions).

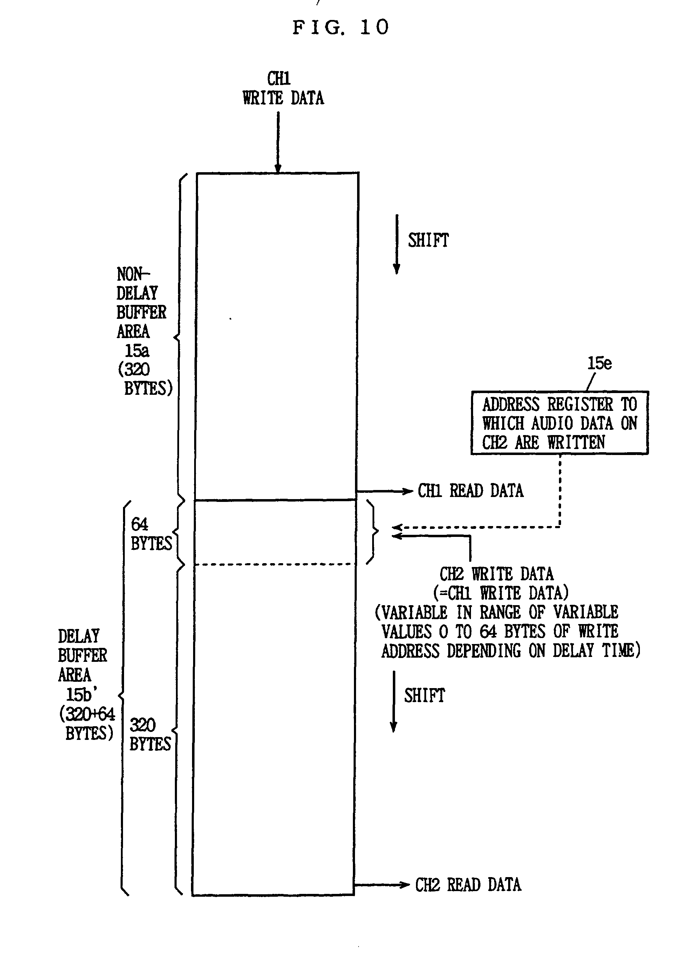

When the capacity of the buffer memory 15 is large, a start address to which a second sound source data is to be written may be variably controlled in the range of 0 to 64 bytes depending on the delay time using a delay buffer area 15b' having a storage capacity which is the sum of the storage capacity of the non-delay buffer area 15a and the storage capacity of the delay buffer area 15b in place of the delay buffer area 15b (see Fig. 10 showing the embodiment as described in detail later).

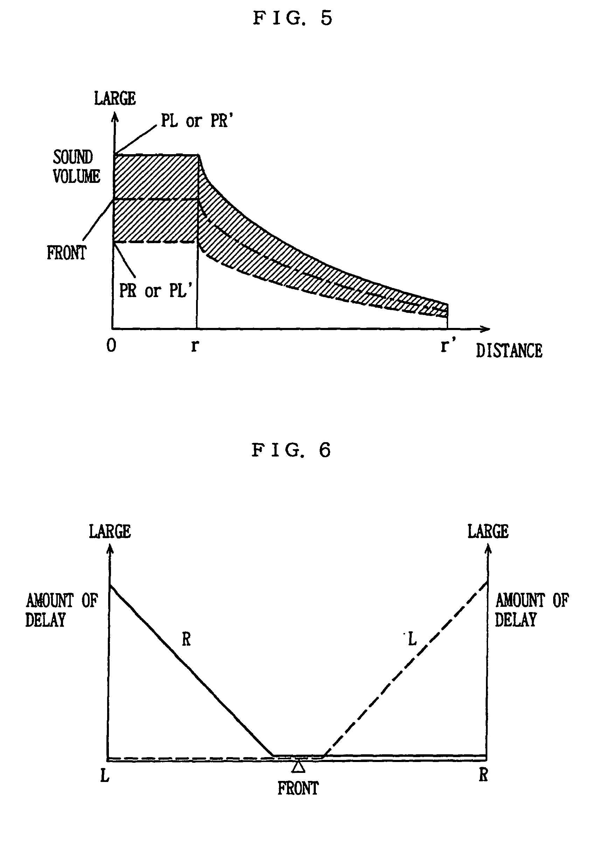

The audio processing unit 12 executes operation processing on the basis of predetermined programs in accordance with the first and second coordinate data, finds a direction (or an angle) to the sound generating object as viewed from the camera (or the hero character), and determines on the basis of the direction an amount of delay (or delay time) so as to have a relationship shown in a characteristic view of Fig. 6 as described later.

Furthermore, the audio processing unit 12 finds the distance between the sound generating object and the camera (or the hero character) on the basis of the first and second coordinate data, and determines the sound volume on the basis of data representing the distance. The audio processing unit 12 reads out audio data corresponding to the processing unit (320 bytes) out of the audio data stored in the sound source data memory 22 in a predetermined period and writes the audio data into the non-delay buffer area 15a, finds an amount of change (an angle) between directions to the sound generating object as viewed from the camera (or the hero character) on the basis of coordinate data respectively representing the position of the camera (or the hero character) and the positions of the sound generating object before and after the processing unit time, and finds delay time corresponding to the amount of change between the directions by operation processing. The delay time may be determined by previously setting data representing delay time in a table for each angle based on a direction and reading out corresponding data representing delay time from the table in place of the operation processing. A write area of the delay buffer area 15b is determined depending on the delay time thus determined.

The audio processing unit 12 reads out the sound source data stored in the non-delay buffer area 15a and outputs the sound source data as a first sound source data, writes the first sound source data into addresses of the delay buffer area 15b corresponding to the delay time, and reads out the sound source data from the final address of the delay buffer area 15b and outputs the sound source data as a second sound source data which is delayed from the first sound source data by desired delay time.

The first audio signal and the second audio signal do not respectively fixedly correspond to left and right speakers (or left and right sound generating bodies of a headphone). The first audio signal corresponds to a channel of audio signals which are not delayed, and the second audio signal correspond to a channel of audio signals which are delayed. The audio processing unit 12 feeds the first audio data to a digital-to-analog conversion circuit for left 16a and feeds the second audio data to a digital-to-analog conversion circuit for right 16b when it judges that the sound generating object exists on the left side of the front of the camera (or the hero character). On the contrary, the audio processing unit 12 feeds the first audio data to the digital-to-analog conversion circuit for right 16b and feeds the second audio data to the digital-to-analog conversion circuit for left 16a when it judges that the sound generating object exists on the right side of the front of the camera (or the hero character). Specifically, the audio processing unit 12 switches a combination of the digital-to-analog conversion circuits 16a and 16b (or 16b and 16a) for feeding the first and second audio data for each unit time depending on whether the sound generating object exists on the right side or the left side as viewed from the camera (or the hero character).

The digital-to-analog conversion circuits 16a and 16b subject the inputted audio data to digital-to-analog conversion, to generate audio signals, and feed the audio signals to corresponding filters 17a and 17b. The filters 17a and 17b respectively subject the left and right audio signals to interpolation processing, to waveform-shape the audio signals into smooth audio signals, and feed the wave-shaped audio signals to left and right speakers 42L and 42R provided in relation to the television 40 and/or feed the audio signals to a headphone 44 through an earphone jack 43, thereby to generate sounds.

The audio processing unit 12 further includes a sound volume control section 12a. The sound volume control section 12a finds the distance between the sound generating object and the camera (or the hero character), and controls the sound volume depending on the found distance. For example, the sound volume control section 12 controls the sound volume so that the sound volume is increased if the camera (or the hero character) approaches the sound generating object to decrease the distance therebetween, while being decreased if the camera (or the hero character) moves farther apart from the sound generating object to increase the distance therebetween. Specifically, when the sound volume is so controlled as to be inversely proportional to the square of the distance between the camera (or the hero character) and the sound generating object, it is possible to change the presence of a sound effect in correspondence to the change in three-dimensional image display with the movement of the camera (or the hero character).

The above-mentioned operations are repeatedly performed for each unit time, whereby a sound effect for a game or BGM music (game music) for raising the atmosphere of the game is generated in synchronization with the change of an image. The audio processing unit 12 controls a difference between timing at which the first audio data is outputted and timing at which the second audio data is outputted (an amount of delay of one of the audio data from the other audio data) on the basis of a direction or an angle to the sound generating object as viewed from the camera (or the hero character), and controls the sound volume on the basis of the distance between the position of the camera (or the hero character) and the position of the sound generating object. As a result, audios or sounds heard from the left and right speakers 42L and 42R or the headphone 44 are also changed in a three-dimensional manner in synchronization with the change in three-dimensional image display corresponding to the movement of the line of sight to the sound generating object as viewed from the camera (or the hero character).

More preferably, when the amounts of delay of right and left sounds are controlled in order to further really represent three-dimensional sound effects, the sound volume may be controlled not in the maximum range from the minimum sound volume to the maximum sound volume but in a range obtained by restricting or suppressing the maximum range. Further, when a sound insulating object for insulating sounds (for example, a building such as a house or a wall, or a large moving object such as a ship or an airplane) exists between the camera (or the hero character) and the sound generating object upon movement of the camera (or the hero character) or arrival of the sound insulating object, sound effects further conforming to reality are obtained if the sound volume control section 12a so controls the sound volume that its level becomes extremely lower.

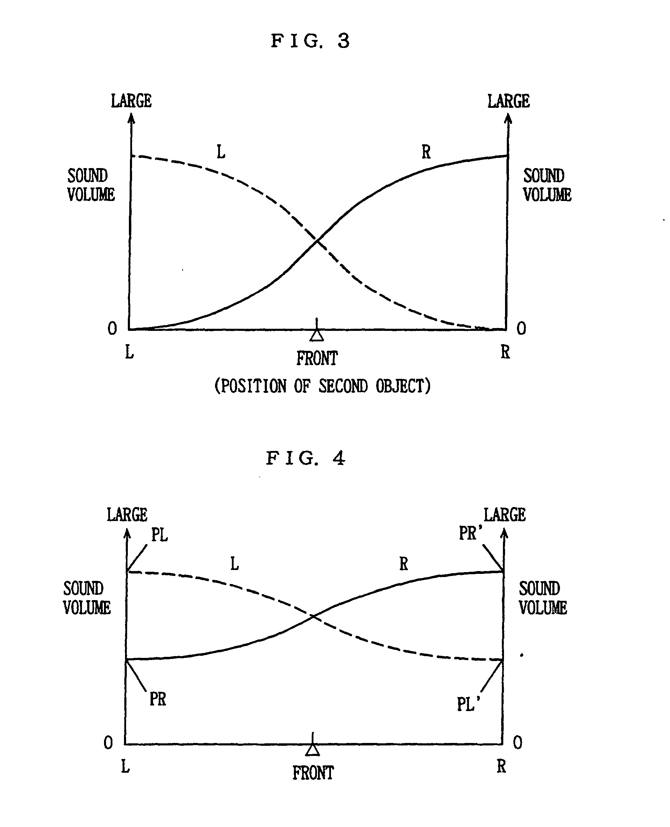

In the block diagram of Fig. 1, the relationship between the delay time and the change in the sound volume depending on the presence or absence of the delays of the first and second audio signals will be specifically described. Operations in this case are achieved by the execution of programs stored in the image data/program data memory 21 by the image processing unit 11 and the audio processing unit 12. For that purpose, it is assumed that programs for carrying out control as shown in characteristic views of Figs. 3 to 6 is previously stored in the memory 21. Further, a mode in which the sound volume is controlled under the condition that there is no amount of delay (zero delay) (see Fig. 3), a mode in which the sound volume is controlled under the condition that there is an amount of delay (see Fig. 4), a mode in which the sound volume is controlled depending on the distance between sound generating objects in a case where there is an amount of delay (see Fig. 5), and a mode in which the amount of delay is controlled by the positional relationship (the direction) between the sound generating object and the camera (or the hero character) (see Fig. 6) are executed individually or in a suitable combination on the basis of the programs.

A specific method for realizing control of the sound volume and/or control of the amount of delay as shown in the characteristic views of Figs. 3 to 6 may be a method of changing the relationship between the distance/direction and the sound volume into an equation so as to be a characteristic waveform shown in Figs. 3 to 6 and storing the equation, operating the distance/direction and/or the sound volume using the stored equation for each control, or setting a sound volume value of the waveform in a table for each left and right unit distance centered around the position of the camera (or the hero character) and reading out the sound volume value considering data representing the distance as an address.

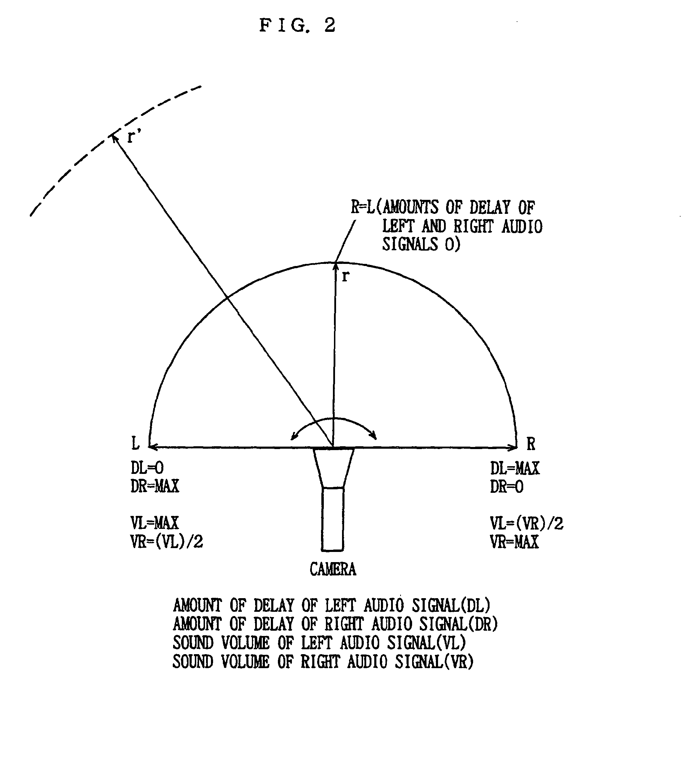

Referring now to Figs. 2 and 3, description is made of the mode in which the sound, volume is controlled under the condition that there is no amount of delay. For example, when the distance between the sound generating object and the camera (or the hero character) is constant in a game scene where it is preferable not to cause respective amounts of delay of left and right audio signals, the sound volume of the left audio signal is set to the maximum amount of change and the sound volume of the right audio signal is set to zero when the sound generating object exists on the left side (at an angle of 0 ) as viewed from the camera (or the hero character) (see Fig. 3). As the sound generating object is so moved rightward as to draw a semicircle spaced apart by a predetermined distance r around the camera (or the hero character) as shown in Fig. 2, the sound volume of the right audio signal is gradually increased and the sound volume of the left audio signal is gradually decreased, as indicated by the characteristic view of Fig. 3. When the sound generating object reaches the front of the camera (or the hero character) (a position at an angle of 90 from the left side), the sound volumes of the left and right audio signals are made equal to each other. Further, when the sound generating object is moved rightward to reach a position on the right side of the camera (or the hero character) (a position at an angle of 180 from the left side), the sound volume of the left audio signal is set to zero and the sound volume of the right audio signal is set to the maximum amount of change.

Even in a case where the sound generating object is fixed, and a direction of the camera (or the hero character) is changed, if the relative positional relationship between the sound generating object and the camera (or the hero character) is the same as the relationship shown in Figs. 2 and 3, the sound volumes of the left and right audio signals may be similarly controlled. When the sound generating object is fixed, and the direction of the camera (or the hero character) is changed, the same applies to the case shown in the characteristic views of Figs. 4 to 6. It is preferable that the increase or decrease of the sound volumes is controlled by multiplexing the change in characteristics shown in Fig. 3 by a correction value so that the sound volumes are inversely proportional to a value obtained by multiplying by a given coefficient the distance between the sound generating object and the camera (or the hero character).

Referring now to Figs. 2 and 4, description is now made of the mode in which the sound volume is controlled under the condition that there is an amount of delay. In a game scene where the sound volume is controlled, combined with three-dimensional display, that is, a game scene where the sound volume is controlled in relation to amounts of delay of the left and right audio signals, when the sound generating object is on the left side as viewed from the camera (or the hero character), the sound volume of the left audio signal is set to the maximum amount of change and the sound volume of the right audio signal is set to approximately one-half of the maximum amount of change (see Fig. 4). The reason why the minimum sound volume is set to not zero but one-half of the maximum sound volume (or the maximum amount of change) in a case where there is a delay is that three-dimensional sound effects are obtained even if the sound volumes of the left and right audio signals are not made different from each other in the maximum range by delaying the left and right audio signals. The sound volume of the right audio signal is gradually increased and the sound volume of the left audio signal is gradually decreased, as shown in Fig. 4, as the sound generating object is so moved rightward as to draw a semicircle spaced apart by a predetermined distance r around the camera (or the hero character) as shown in Fig. 2. When the sound generating object reaches the front of the camera (or the hero character), the sound volumes of the left and right audio signals are made equal to each other. Further, when the sound generating object is moved rightward to reach a position on the right side of the camera (or the hero character), the sound volume of the right audio signal is set to the maximum amount of change and the sound volume of the left audio signal is set to one-half of the maximum amount of change.

Referring now to Figs. 2 and 5, description is made of the relationship between the distance and the sound volume in the mode in which the sound volume is controlled under the condition that there is an amount of delay as shown in Fig. 4. When the sound generating object exists within the range of a radius r from the camera (or the hero character), the sound volume is changed in the range between the maximum amount of change and the minimum amount of change depending on the direction or the position of the sound generating object as viewed from the camera (or the hero character). The reason for this is that if the sound generating object is positioned within the range of a given short distance r, the sound volume hardly changes with the change in the distance. In Fig. 2, when the sound generating object exists at the front of the camera (or the hero character), the sound volumes of the left and right audio signals take values intermediate between the maximum amount of change and the minimum amount of change. On the other hand, as the sound generating object moves farther apart in the radial direction, the sound volume is so changed as to be exponentially decreased. When the sound generating object moves farther apart from the camera (or the hero character) by not less than a predetermined distance, the sound volume is set to zero.

Referring now to Figs. 2 and 6, description is made of the mode in which the amount of delay is controlled in relation to the positional relationship between the sound generating object and the camera (or the hero character). When the camera (or the hero character) faces the front, and the sound generating object exists at the front, it is necessary that there is no amount of delay between the left audio signal and the right audio signal. If the amount of delay is so controlled as to be changed even when the camera (or the hero character) is only slightly moved leftward or rightward, an uncomfortable impression is given in relation to image display. As shown in Fig. 6, therefore, the amount of delay is so controlled as not to be changed in the range of predetermined distances on the left and right sides from the camera (or the hero character). Specifically, when the sound generating object is on the left side as viewed from the camera (or the hero character), the amount of delay of the left audio signal is set to zero and the amount of delay of the right audio signal is set to the maximum amount of delay. The amount of delay of the right audio signal is decreased as the sound generating object is so moved rightward as to draw a semicircle spaced apart by a predetermined distance r around the camera (or the hero character), the amounts of delay of the left and right audio signals are set to zero in the range of predetermined distances on the left and right sides from the center, and the amount of delay of the left audio signal is gradually increased with the amount of delay of the right audio signal set to zero as the sound generating object is moved rightward from a position spaced apart from the center by a predetermined distance.

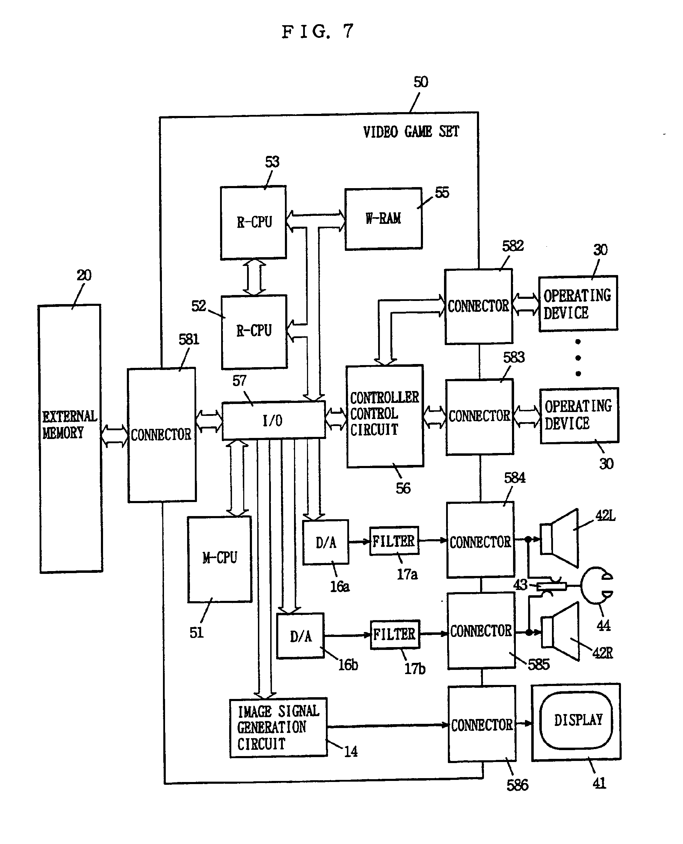

Fig. 7 is a block diagram showing the construction of a sound generator according to a second embodiment of the present invention. The sound generator according to the present embodiment differs from the sound generator according to the first embodiment (see Fig. 1) in the following points. First, the main body of the processor 10 is replaced with a video game set 50. Further, the image processing unit 11 is constituted by a main CPU (M-CPU) 51 and two risk CPUs (R-CPUs) 52 and 53. The image memory 13 and the buffer memory 15 are constituted by a working RAM (W-RAM) 55 having a large storage capacity. Further, the audio processing unit 12 is constituted by one R-CPU 53. That is, the R-CPU 53 is used for both image processing and audio processing. As described in the foregoing, the image processing unit 11 is constituted by the three CPUs (the M-CPU 51, the R-CPU 52, and the R-CPU 53). The reason why the audio processing unit 12 is constituted by one R-CPU 53 is that the audio processing can be performed in a shorter time period than the image processing. The reason why the image memory 13 and the buffer memory 15 are constituted by one W-RAM 55 having a large capacity (for example, 4 megabytes) is that the degree of freedom of the assignment of a memory space is increased so that the distribution of time periods used for the image processing and the audio processing can be set flexibly depending on the purpose of use.

In order to control input/output of a plurality of conrtollers 30, a controller control circuit 56 is provided. Further, an input/output control circuit (I/O) 57 is provided in order to control data transfer or input/output between the M-CPU 51, the R-CPU 52, the R-CPU 53 and the W-RAM 55 and an external memory 20, the controller control circuit 56 and the like. Further, a connector for a cartridge 581 is provided in order to detachably mount the external memory 20, connectors for a controller 582 and 583 are provided in order to detachably connect the controllers 30 to the controller control circuit 56, connectors for audio 584 and 585 are provided in order to connect filters 17a and 17b to speakers 42L and 42R or a headphone 44 of a television 40, and a connector for an image signal 586 is provided in order to connect an image signal generation circuit 14 to a display 41. In the following description, the various types of connectors 581 to 586 are merely referred to as "connectors". Since the other construction is the same as that shown in Fig. 1 and hence, the same sections are assigned the same reference numerals, and the detailed description thereof is omitted.

As the external memory 20 serving as an information storage medium, the ROM cartridge may be replaced with various recording or storage media such as a CD-ROM optically storing data, a magnetic disk magnetically storing data, and a magneto-optic disk. In the case, a recording or reproducing device corresponding to the type of information storage medium must be provided to read out a certain amount of data from the information storage medium and temporarily store the data in a memory space in a part of the W-RAM 55 in the video game set 50.

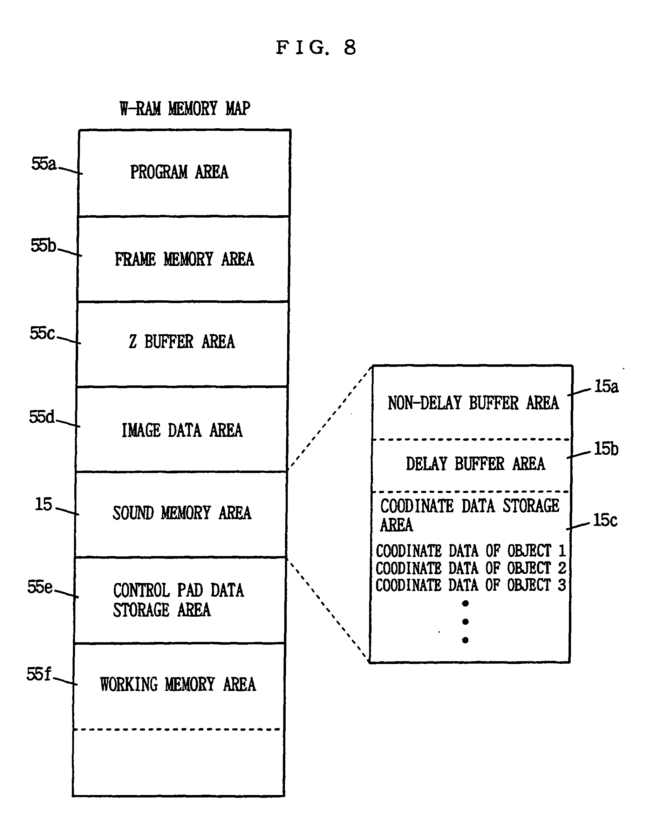

Fig. 8 is a diagram illustrating the memory space of the W-RAM 55. In the W-RAM 55, the memory space is assigned on the basis of programs previously stored in an image/program memory 21 in the external memory 20. One example will be described as follows. The W-RAM 55 includes a program area 55a to and in which parts of the programs stored in the image/program memory 21 are transferred and stored, a frame memory area 55b storing image data corresponding to one frame (corresponding to an image frame), a Z buffer area 55c storing depth coordinate data for each object or character, an image data area 55d, a sound memory area 15 for audio data processing, a control pad data storage area 55e, and a working memory area 55f.

The sound memory area 15 corresponds to the buffer memory shown in Fig. 1, and includes a non-delay buffer area 15a, a delay buffer area 15b, and an object coordinate data storage area 15c, as illustrated in Fig. 8. The non-delay buffer area 15a and the delay buffer area 15b have memory structures as specifically shown in Fig. 9, and data are written/read out as shown. Specifically, when audio data for each processing unit are written to/read out of the non-delay buffer area 15a, data previously written are shifted to the succeeding address one byte at a time every time audio data composed of one byte are written to the first address. Specifically, audio data are written in a first-in first-out manner, and are read out and outputted as audio data (read data) on a first channel (CHl) from the final address. The audio data on the first channel read out from the non-delay buffer area 15a are written as they are to the first address of the delay buffer area 15b. At this time, audio data at an address designated by an address register (an internal register included in the R-CPU 53) 15d storing a read address of the delay buffer area 15b are read out and outputted as audio data on a second channel (CH2). The number of addresses (bytes) from the first address of the delay buffer area 15b to the read address designated by the address register 15d becomes delay time of sounds on the second channel from sounds on the first channel. In this case, however, a capacity corresponding to the maximum delay time is sufficient as the storage capacity of the delay buffer area 15b. However, a read control program in the R-CPU 53 becomes complicated. On the other hand, when the sounds on the second channel need not be delayed, as compared with the sounds on the first channel, the read address designated by the address register 15d may be set to the same first address as a write address of the delay buffer area 15b. Therefore, the delay time can be changed in a wide range.

Although in the embodiment shown in Fig. 9, description was now made of a case where the sound memory area (or the buffer memory for audio processing) 15 is efficiently used in the range of the minimum storage capacity, a memory structure as shown in Fig. 10 may be used if a sound memory area 15 having a large storage capacity can be prepared. In Fig. 10, the storage capacity of a delay buffer area 15b' is set to a capacity which is the sum of the storage capacities of a non-delay buffer area 15a and a delay buffer area 15b (15b' = 15a + 15b). Audio data on the first channel (CHl) are written and read out in the same manner as that shown in Fig. 9, while audio data on the second channel (CH2) are written and read out in the following manner. Specifically, a value of a write address corresponding to delay time is written into an address register 15e contained in the R-CPU 53 by the R-CPU 53. The same audio data as those on the first channel are simultaneously written at addresses designated by the address register 15e. The audio data are read out from the delay buffer area 15b' (sounds on the second channel are generated), starting at the final address of the delay buffer area 15b'. Consequently, timing at which the audio data on the second channel are read out is delayed from timing at which the same audio data on the first channel are read out (sounds on the first channel are generated) by a time period proportional to the number of addresses obtained by subtracting the value of the address in the address register 15e from the number of addresses corresponding to the delay buffer area 15b.

On the other hand, the coordinate data storage area 15c is an area storing coordinate data of an sound generating object or the like which is displayed on a screen. For example, the coordinate data storage area 15c sotres coordinate data of an object 1 generating sounds such as an enemy character or a waterfall as coordinate data of the object 1. The coordinate data storage area 15c stores coordinate data of an object 2 such as a camera (or a hero character) whose line of sight is moved to see the object 1 by an operator operating the controllers 30 as coordinate data of the object 2. When sounds are generated from the object 1, the M-CPU 51 calculates a direction to the object 1 as viewed from the object 2 and the distance therebetween on the basis of the coordinate data of the object 1 and the coordinate data of the object 2. Further, a program previously so set as to produce three-dimensional sound effects most suitable for three-dimensional image display out of the characteristic views of Figs. 3 to 6 is executed on the basis of data representing the direction and the distance, to generate data representing the delay time, the sound volume and the type of sound, and feed to the R-CPU 53 the data representing the delay time, the sound volume and the type of sound. The R-CPU 53 carries out writing/reading control described while referring to Fig. 9 or 10, to control the delay time of the sounds generated from each of the first channel and the second channel and control the sound volume thereof.

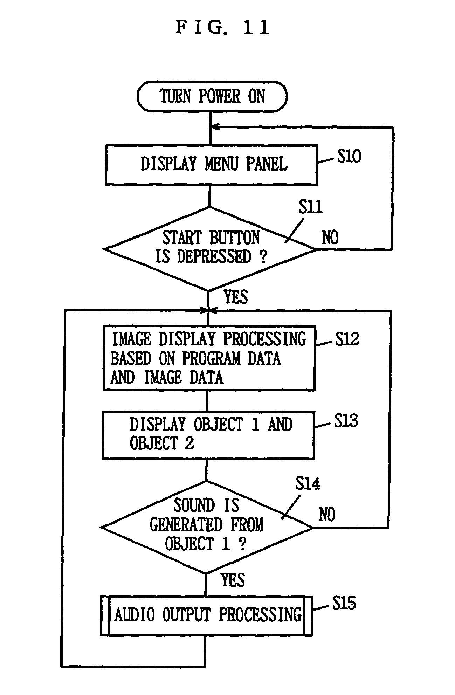

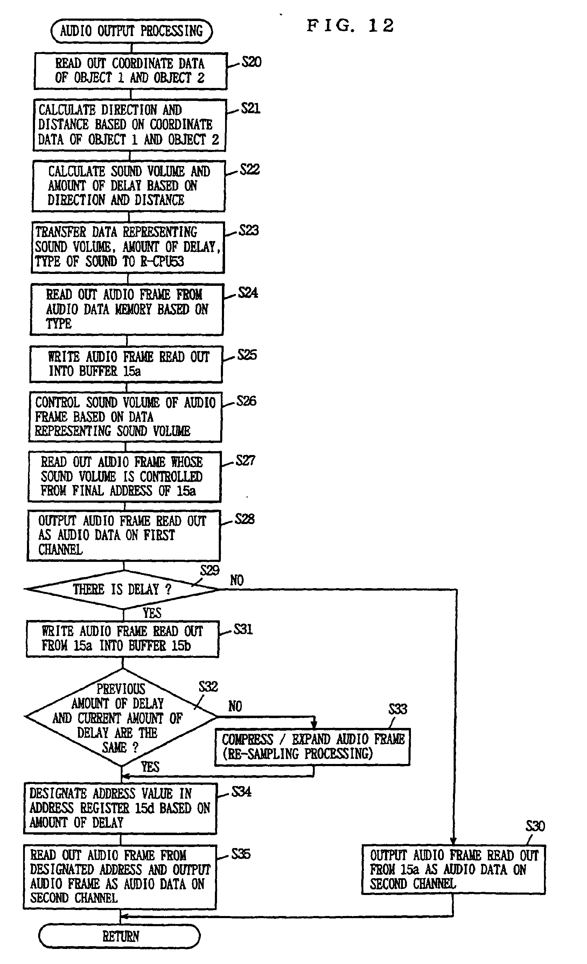

Referring to Fig. 11, description is now made of the schematic flow of the game. When a power switch of the game set 50 is turned on, the following operations are performed by the M-CPU 51 and/or the R-CPUs 52 and 53. Specifically, in the step S10, a menu panel for initialization of the game is displayed. In the step S11, the M-CPU 51 judges whether or not a decision button (for example, a start button) of the controller 30 is depressed. When it is judged that the start button is depressed, the program proceeds to the step S12. When it is judged that the start button is not depressed, the program is returned to the step S10. In the step S12, the M-CPU 51, the R-CPU 52 and the R-CPU 53 perform image display processing for the progress of the game on the basis of program data and image data which are stored in the external memory 20. In the step S13, an object 1 which is, for example, an enemy character generating sounds and an object 2 which is a hero character operated as an operator are displayed on the display 41 as one scene on a game screen. In the step S14, it is judged whether or not the condition that the object 1 should generate sounds is satisfied on the basis of a game program. When it is judged that the condition that the object 1 should generate sounds is satisfied, the program proceeds to the step S15. In the step S15, processing for audio output (processing in a subroutine described in detail while referring to Fig. 12 as described later) is performed. On the other hand, in the step S14, when it is judged that the condition that the object 1 should generate sounds is not satisfied, the program is returned to the step S12. In the step S12, image display processing corresponding to the progress of the game is continued.

Referring now to Fig. 12, description is made of operations in the subroutine of the audio output processing. First, in the step S20, the M-CPU 51 reads out the coordinate data of the object 1 and the coordinate data of the object 2 on the basis of the coordinate data storage area 15c stored in the sound memory area 15 shown in Fig. 8. In the step S21, the direction to the object 1 as viewed from the object 2 and the distance therebetween are then calculated on the basis of the coordinate data of the object 1 and the coordinate data of the object 2. In the step S22, as described while referring to Figs. 3 to 6, the amount of delay is calculated on the basis of the direction in which the object 1 exists, and the sound volume is calculated on the basis of the direction and the distance. In the step S23, data representing the sound volume and the amount of delay which are found by the calculation and data representing the type of sound are then transferred to the R-CPU 53. In the step S24, the R-CPU 53 then reads out a audio frame (audio data for each processing unit) from the sound source data memory 22 in the external memory 20 on the basis of the data representing the type of sound. In the step S25, the audio frame read out from the sound source data memory 22 is then written into the non-delay buffer area 15a shown in Fig. 9. In the step S26, the sound volume of the audio frame is then controlled on the basis of the data representing the sound volume. Specifically, the sound volume is separately controlled on the left and right sides in correspondence to the direction of the object 1 as indicated by L and R in Fig. 3 or 4, and the sound volume is controlled in correspondence to the distance to the object 1 as shown in Fig. 5. In the step S27, data of the audio frame whose sound volume is controlled is then read out from the final address of the non-delay buffer area 15a. In the step 528, the audio frame read out is then outputted as audio data on a first channel. In the step S29, the R-CPU 53 then judges whether or not there is a delay on the basis of the data representing the amount of delay. When it is judged that there is no delay, the program proceeds to the step S30. In the step S30, the R-CPU 53 outputs the audio frame read out from the non-delay buffer area 15a as audio data on a second channel.

On the other hand, when it is judged that there is a delay, the program proceeds to the step S31. In the step S31, the R-CPU 53 writes the audio frame read out from the non-delay buffer area 15a into the delay buffer area 15b. In the step S32, the R-CPU 53 then judges whether or not the previous amount of delay is the same as the current amount of delay. When it is judged that they are not the same, the program proceeds to the step S33. In the step S33, the R-CPU 53 performs re-sampling processing of the audio frame. Specifically, when the current amount of delay is smaller than the previous amount of delay, the R-CPU 53 compresses the audio frame by the amount of change in the amount of delay. When the current amount of delay is larger than the previous amount of delay, the R-CPU 53 expands the audio frame by the amount of change in the amount of delay. In the step S33, the re-sampling processing of the audio frame is then performed, after which the program proceeds to the step S34.

On the other hand, when it is judged in the step S32 that the current amount of delay is the same as the previous amount of delay, the program proceeds to the step S34. Further, when the current amount of delay corresponds to the amount of delay at the time of starting sound generation, the current amount of delay cannot be compared with the previous amount of delay, whereby the program proceeds to the step S34 considering that they are the same. In the step S34, the R-CPU 53 designates a value of an address in the address register 15d on the basis of the amount of delay. In the step 535, the R-CPU 53 then reads out the audio frame written into the delay buffer area 15b from the designated address, and outputs the audio frame as audio data on the second channel.

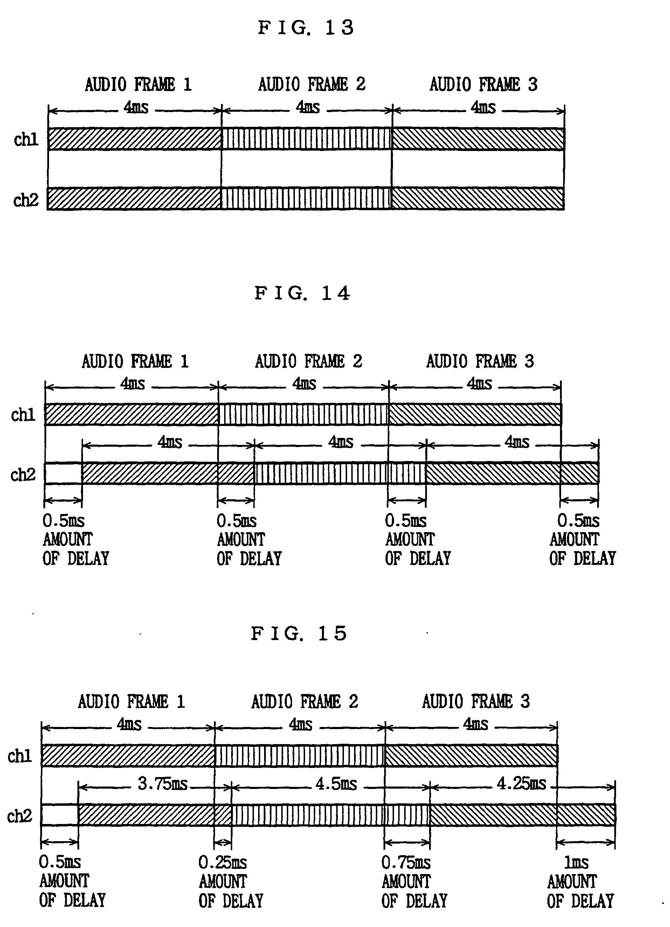

Referring now to a timing chart shown in Fig. 13, 14 or 15, description is made of specific operations in the foregoing steps S29 to S35.

In the foregoing step S29, when it is judged that there is no amount of delay, audio data are outputted as shown in the timing chart of Fig. 13. In this example, the length of time of audio data for each processing unit (a audio frame) is set to 1/240 seconds (approximately 4 ms), for example. When the audio frame 1 is outputted, delay processing need not be performed by the first channel and the second channel, whereby the R-CPU 53 simultaneously outputs the audio frame 1 to the first channel and the second channel. This is also repeated with respect to data corresponding to the audio frame 2 and the subsequent data.

When it is judged in the step S29 that there is an amount of delay, and it is judged in the subsequent step S32 that the previous amount of delay and the current amount of delay are the same (that is, the amount of delay is constant), the audio data are outputted as in the timing chart of Fig. 14. In this example, it is assumed that a time period corresponding to the amount of delay is variably controlled in the range of 0 to 1/1000 seconds (1 ms), and the second channel has a constant amount of delay of 1/2000 seconds (0.5 ms). When the sound generation is started, the R-CPU 53 outputs the audio frame 1 on the side of the second channel after a delay of 0.5 ms from the audio frame 1 on the side of the first channel in order to form a portion where there is no sound for only a time period corresponding to the amount of delay on the side of the second channel. When the audio frame 1 on the side of the first channel has been outputted, a portion, which corresponds to 0.5 ms, of the audio frame 1 remains on the side of the second channel. When the audio frame 2 is outputted on the side of the first channel, the portion, which corresponds to the remaining 0.5 ms, of the audio frame 1 is outputted on the side of the second channel, after which the second frame 2 is outputted This is repeated with respect to data corresponding to the audio frame 3 and the subsequent data. Consequently, the audio data are always outputted on the side of the second channel after a delay of 0.5 ms from those on the side of the first channel. This operation is repeated until the amount of delay is changed or the sound generation is terminated, whereby it is possible to achieve audio output processing in a case where the amount of delay is constant.

When it is judged in the step S29 that there is an amount of delay, and it is judged in the subsequent step S32 that the previous amount of delay and the current amount of delay are not the same (that is, the amount of delay is variable), audio data are outputted as shown in the timing chart of Fig. 15. For example, consider a case where when the audio frame 1 and the audio frame 2 on the side of the first channel are outputted, the audio frame 1 and the audio frame 2 on the side of the second channel are respectively outputted after delays of 0.5 ms and 0.25 ms (that is, the amount of delay is changed from 0.5 ms to 0.25 ms). The amount of change in the amount of delay at this time is decreased by 0.25 ms. Therefore, the R-CPU 53 compresses the audio frame 1 on the side of the second channel by 0.25 ms corresponding to the amount of change in the amount of delay (that is, the audio frame 1 is re-sampled from 4 ms to 3.75 ms). When the audio frame 2 on the side of the first channel is outputted, a portion, which corresponds to 0.25 ms, of the audio frame 1 remains on the side of the second channel, whereby it is possible to achieve the change in the amount of delay from 0.5 ms to 0.25 ms. When the audio frame 3 on the side of the first channel is then outputted, the amount of delay on the side of the second channel is changed to 0.75 ms, whereby the R-CPU 53 expands the audio frame 2 on the side of the second channel by 0.5 ms corresponding to the amount of change in the amount of delay (that is, the audio frame 2 is re-sampled from 4 ms to 4.5 ms). When the audio frame 3 on the side of the first channel is outputted, a portion, which corresponds to 0.75 ms, of the audio frame 2 remains on the side of the second channel, whereby it is possible to achieve the change in the amount of delay from 0.25 ms to 0.75 ms. Specifically, letting n be the length of time of the audio frame, db be the previous amount of delay, and df be the next amount of delay, the audio output processing in a case where the amount of delay is variable can be achieved by re-sampling processing of the audio frame from (n) to (n + df - db).

Consequently, when the amount of delay is variable, the production of noise due to the overlapping and the drop of data can be prevented by re-sampling processing of the audio data. data.

Although the present invention has been described and illustrated in detail, it is clearly understood that the same is by way of illustration and example only and is not to be taken by way of limitation, the scope of the present invention being limited only by the terms of the appended claims.

## Claims

1. A sound generator for generating, in an image display device for displaying a three-dimensional image as viewed from a virtual camera, sounds having a spatial extent corresponding to the three-dimensional image, comprising:
first sound generation means (42L or 42R) for generating a first sound;
second sound generation means (42R or 42L) for generating a second sound;
sound source data storage means (22) for digitally storing sound source data;
temporary storage means (15) for temporarily storing the sound source data read out from said sound source data storage means;
delay time calculation means (12) for calculating, when said image display device displays a first display object so defined as to generate sounds, delay time on the basis of a direction to the first display object as viewed from the position of a virtual camera or a character;
audio processing means (12) for reading out the sound source data corresponding to said first display object from said sound source data storage means for each unit time, storing the sound source data in said temporary storage means and reading out the sound source data as a first sound source data, and reading out the sound source data stored in the temporary storage means as a second sound source data at timing delayed by the delay time calculated by said delay time calculation means from timing at which said first sound source data is read out;
first digital-to-analog conversion means (16a or 16b) for converting the first sound source data read out from said temporary storage means into an analog audio signal and feeding the analog audio signal to said first sound generation means; and
second digital-to-analog conversion means (16b or 16a) for converting the second sound source data read out from said temporary storage means into an analog audio signal and feeding the analog audio signal to said second sound generation means,
**characterized in that** said audio processing means (12) comprises sound volume control means (12a) for individually controlling sound volumes of said first and second sounds generated by said first and second sound generation means (42L, 42R) and suppressing control ranges of said first and a second sound volume in a narrower range than a maximum range from a minimum sound volume to a maximum sound volume on the basis of a direction to the first display object as viewed from a position of said virtual camera or said character.

2. The sound generator according to claim 1, wherein
said sound volume control means (12a) is further adapted for individually controlling the sound volumes of said first and second sounds on the basis of the distance between said first display object and said virtual camera.

3. The sound generator according to claim 2, wherein
said sound volume control means (12a) controls the respective sound volumes of said first and second sounds so as to be inversely proportional to a predetermined coefficient times the distance between said first display object and said virtual camera.

4. The sound generator according to any of the claims 1 to 3, wherein
said sound volume control means (12a) suppresses the control ranges of the sound volumes in inverse proportion to a predetermined coefficient times the distance between said first display object and said virtual camera.

5. The sound generator according to claim 1, wherein
there is provided a controller in relation to said image display device, and a display position of the character is changed in response to an operation of said controller by a player and the line of sight of said virtual camera is moved in synchronization with a movement of the character, and
said delay time calculation means is adapted to calculate the delay time on the basis of a direction to the first display object as viewed from the character when said image display device displays the character in addition to said first display object.

6. The sound generator according to claim 5, wherein
said sound volume control means (12a) for individually controlling the sound volumes of said first and second sounds on the basis of the distance between said first display object and said character.

7. The sound generator according to claim 5 or 6, wherein
said sound volume control means (12a) controls the respective sound volumes of said first and second sounds so as to be inversely proportional to a predetermined coefficient times the distances between said first display object and said character.

8. The sound generator according to any of claims 5 to 7, wherein
said sound volume control means (12a) suppresses the control ranges of the sound volumes in inverse proportion to a predetermined coefficient times the distances between said first display object and said character.

9. The sound generator according to claim 1, wherein said temporary storage means comprises
first temporary storage means (15a) capable of storing the sound source data read out for each unit time from said sound source data storage means, and having a capacity for storing the amount of the sound source data which corresponds to at least the unit time, and
second temporary storage means (15b) capable of storing the sound source data read out for each unit time from said sound source data storage means (22), and having a capacity for storing the amount of the sound source data which is larger by an amount corresponding to predetermined maximum delay time than that stored in the temporary storage means (15a), and said audio processing means (12) comprises
writing the sound source data read out from said sound source data storage means (22) for each unit time into said first temporary storage means (15a), and then reading out the written sound source data as a first sound data, and
writing the sound source data read out from said sound source data storage means (22) for each unit time into said second temporary storage means (15b) with a write address changed depending on the delay time calculated by said delay time calculation means, and then reading out the written sound source data as a second sound source data, to delay the second sound source data from the first sound source data by desired time in the range of said maximum delay time.

10. The sound generator according to claim 1, wherein said temporary storage means comprises
first temporary storage means (15a) capable of storing the sound source data read out for each unit time from said sound source data storage means, and having a capacity for storing the amount of the sound source data which corresponds to at least the unit time, and
second temporary storage mans (15b) capable of storing the sound source data read out from said first temporary storage means (15a), and having a capacity for storing the amount of the sound source data which corresponds to predetermined maximum delay time, and said audio processing means (12) comprises
writing the sound source data read out from said sound source data storage means (22) for each time unit into said first temporary storage means (15a), and then reading out the written sound source data as a first sound source data, and
writing the first sound source data read out from said first temporary storage means (15a) into said second temporary storage means (15b), and then reading out the first sound source data as a second sound source data with a read address changed depending on the delay time calculated by said delay time calculation means, to delay the second sound source data from the first sound source data by desired time in the range of said maximum delay time.

## Patentansprüche

1. Geräuschgeber zum Erzeugen in einem Bildanzeigegerät zum Anzeigen eines dreidimensionalen Bildes, wie es von einer virtuellen Kamera aus gesehen wird, von Geräuschen, die eine räumliche Ausdehnung aufweisen, die dem dreidimensionalen Bild entspricht, umfassend:
erste Geräuscherzeugungsmittel (42L oder 42R) zum Erzeugen eines ersten Geräusches;
zweite Geräuscherzeugungsmittel (42R oder 42L) zum Erzeugen eines zweiten Geräusches;
Geräuschquelldatenspeichermittel (22) zum digitalen Speichern von Geräuschquelldaten;
temporäre Speichermittel (15) zum temporären Speichern der Geräuschquelldaten, die ausgelesen sind von den Geräuschquelldatenspeichermitteln;
Verzögerungszeitberechnungsmittel (12) zum Berechnen, wenn das Bildanzeigegerät ein erstes Anzeigeobjekt anzeigt, das so definiert ist, um Geräusche zu erzeugen, von Verzögerungszeit basierend auf einer Richtung zu dem ersten Anzeigeobjekt wie gesehen von der Position einer virtuellen Kamera oder einer Figur;
Audioverarbeitungsmittel (12) zum Auslesen der Geräuschquelldaten, die dem ersten Anzeigeobjekt entsprechen, von den Geräuschquelldatenspeichermitteln für jede Zeiteinheit, wobei die Geräuschquelldaten in den temporären Speichermitteln gespeichert werden und wobei die Geräuschquelldaten ausgelesen werden als erste Geräuschquelldaten, und zum Auslesen der Geräuschquelldaten, die in den temporären Speichermitteln gespeichert sind als zweite Geräuschquelldaten, zu einer Zeit, die verzögert ist um die Verzögerungszeit, die durch die Verzögerungszeitberechnungsmittel berechnet ist, von der Zeit, bei der die ersten Geräuschquelldaten ausgelesen worden sind;
erste Digital-zu-analog-Wandlungsmittel (16a oder 16b) zum Wandeln der ersten Geräuschquelldaten, die ausgelesen sind von den temporären Speichermitteln, in ein analoges Audiosignal und zum Einspeisen des analogen Audiosignals zu den ersten Geräuscherzeugungsmitteln; und
zweite Digital-zu-analog-Wandlungsmittel (16b oder 16a) zum Wandeln der zweiten Geräuschquelldaten, die ausgelesen sind von den temporären Speichermitteln, in ein analoges Audiosignal und zum Einspeisen des analogen Audiosignals in die zweiten Geräuscherzeugungsmittel,
**dadurch gekennzeichnet, dass** die Audioverarbeitungsmittel (12) Geräuschlautstärkesteuermittel (12a) umfassen zum individuellen Steuern von Geräuschlautstärken der ersten und zweiten Geräusche, die erzeugt werden durch die ersten und zweiten Geräuscherzeugungsmittel (42L, 42R), und zum Niederhalten von Steuerbereichen der ersten und einer zweiten Geräuschlautstärke in einem schmaleren Bereich als einem maximalen Bereich von einer minimalen Geräuschlautstärke zu einer maximalen Geräuschlautstärke auf der Basis einer Richtung zu dem ersten Anzeigeobjekt wie gesehen von einer Position der virtuellen Kamera oder der Figur.

2. Geräuschgeber nach Anspruch 1, wobei
die Geräuschlautstärkesteuermittel (12a) weiter angepasst sind zum individuellen Steuern der Geräuschlautstärken der ersten und zweiten Geräusche auf der Basis der Entfernung zwischen dem ersten Anzeigeobjekt und der virtuellen Kamera.

3. Geräuschgeber nach Anspruch 2, wobei
die Geräuschlautstärkesteuermittel (12a) die jeweiligen Geräuschlautstärken der ersten und zweiten Geräusche steuern, so dass sie invers proportional sind zu einem vorbestimmten Koeffizienten mal der Entfernung zwischen dem ersten Anzeigeobjekt und der virtuellen Kamera.

4. Geräuschgeber nach irgendeinem der Ansprüche 1 bis 3, wobei
die Geräuschlautstärkesteuermittel (12a) die Steuerbereiche der Geräuschlautstärken invers proportional niederhalten zu einem vorbestimmten Koeffizienten mal der Entfernung zwischen dem ersten Anzeigeobjekt und der virtuellen Kamera.

5. Geräuschgeber nach Anspruch 1, wobei
dort eine Steuerung bereitgestellt ist in Bezug auf das Bildanzeigegerät und wobei eine Anzeigeposition der Figur geändert wird in Reaktion auf eine Operation der Steuerung durch einen Spieler und wobei die Blickrichtung der virtuellen Kamera bewegt wird synchron mit einer Bewegung der Figur und wobei die Verzögerungszeitberechnungsmittel angepasst sind zum Berechnen der Verzögerungszeit auf der Basis einer Richtung zu dem ersten Anzeigeobjekt wie gesehen von der Figur, wenn das Bildanzeigegerät die Figur zusätzlich zu dem ersten Anzeigeobjekt anzeigt.

6. Geräuschgeber nach Anspruch 5, wobei
die Geräuschlautstärkesteuermittel (12a) zum individuellen Steuern der Geräuschlautstärken der ersten und zweiten Geräusche sind auf der Basis der Entfernung zwischen dem ersten Anzeigeobjekt und der Figur.

7. Geräuschgeber nach Anspruch 5 oder 6, wobei
die Geräuschlautstärkesteuermittel (12a) die jeweiligen Geräuschlautstärken des ersten und zweiten Geräusches steuern, so dass sie invers proportional sind zu einem vorbestimmten Koeffizienten mal der Entfernung zwischen dem ersten Anzeigeobjekt und der Figur.

8. Geräuschgeber nach irgendeinem der Ansprüche 5 bis 7, wobei
die Geräuschlautstärkesteuermittel (12a) die Steuerbereiche der Geräuschvolumen niederhalten invers proportional zu einem vorbestimmten Koeffizienten mal der Entfernung zwischen dem ersten Anzeigeobjekt und der Figur.

9. Geräuschgeber nach Anspruch 1, wobei die temporären Speichermittel umfassen
erste temporäre Speichermittel (15a), die in der Lage sind, die Geräuschquelldaten zu speichern, die ausgelesen werden für jede Zeiteinheit von den Geräuschquelldatenspeichermitteln, und die die Fähigkeit haben zum Speichern der Menge der Geräuschquelldaten, die der letzten Zeiteinheit entsprechen, und
zweite temporäre Speichermittel (15b), die in der Lage sind, die Geräuschquelldaten zu speichern, die ausgelesen werden für jede Zeiteinheit von den Geräuschquelldatenspeichermitteln (22), und die eine Kapazität haben zum Speichern der Menge der Geräuschquelldaten, die um eine Menge größer ist entsprechend zu der vorbestimmten maximalen Verzögerungszeit als diejenige, die in den temporären Speichermitteln (15a) gespeichert ist, und die Audioverarbeitungsmittel (12) umfassen, und
Schreiben der Geräuschquelldaten, die ausgelesen werden von den Geräuschquelldatenspeichermitteln (22), für jede Zeiteinheit in das erste temporäre Speichermittel (15a) und dann Auslesen der geschriebenen Geräuschquelldaten als erste Geräuschdaten, und
Schreiben der Geräuschquelldaten, die ausgelesen werden von den Geräuschquelldatenspeichermitteln (22), für jede Zeiteinheit in die zweiten temporären Speichermittel (15b) mit einer Speicheradresse, die geändert ist in Abhängigkeit von der Verzögerungszeit, die berechnet wird durch die Verzögerungszeitberechnungsmittel, und dann Auslesen der geschriebenen Geräuschquelldaten als zweite Geräuschquelldaten, um die zweiten Geräuschquelldaten von den ersten Geräuschquelldaten um eine gewünschte Zeit im Bereich der maximalen Verzögerungszeit zu verzögern.

10. Geräuschgeber nach Anspruch 1, wobei die temporären Speichermittel umfassen
erste temporäre Speichermittel (15a), die in der Lage sind, die Geräuschquelldaten zu speichern, die ausgelesen werden für jede Zeiteinheit von den Geräuschquelldatenspeichermitteln, und die die Kapazität zum Speichern des Betrags der Geräuschquelldaten haben, die der letzten Zeiteinheit entsprechen, und
zweite temporäre Speichermittel (15b), die in der Lage sind, die Geräuschquelldaten zu speichern, die von dem ersten temporären Speichermittel (15a) ausgelesen werden und die eine Kapazität haben zum Speichern der Menge der Geräuschquelldaten, welches der vorbestimmten maximalen Verzögerungszeit entspricht, und wobei die Audioverarbeitungsmittel (12) umfassen
Schreiben der Geräuschquelldaten, die ausgelesen werden von den Geräuschquelldatenspeichermitteln (22), für jede Zeiteinheit in die ersten temporären Speichermittel (15a) und dann Auslesen der geschriebenen Geräuschquelldaten als erste Geräuschquelldaten und
Schreiben der ersten Geräuschquelldaten, die ausgelesen werden von den ersten temporären Speichermitteln (15a), in die zweiten temporären Speichermittel (15b) und dann Auslesen der ersten Geräuschquelldaten als zweite Geräuschquelldaten mit einer Leseadresse, die geändert wird in Abhängigkeit von der Verzögerungszeit, die berechnet wird durch die Verzögerungszeitberechnungsmittel, um die zweiten Geräuschquelldaten von den ersten Geräuschquelldaten um die gewünschte Zeit in dem Bereich der maximalen Verzögerungszeit zu verzögern.

## Revendications

1. Générateur de sons pour générer, dans un dispositif d'affichage d'images servant à afficher une image tridimensionnelle telle que visionnée par une caméra virtuelle, des sons ayant une portée spatiale correspondant à l'image tridimensionnelle, comportant :
des premiers moyens de génération de son (42L ou 42R) pour générer un premier son,
des seconds moyens de génération de son (42R ou 42L) pour générer un second son,
des moyens de mémorisation de données de source sonore (22) pour mémoriser numériquement des données de source sonore,
des moyens de mémorisation temporaire (15) pour mémoriser temporairement les données de source sonore lues à partir desdits moyens de mémorisation de données de source sonore,
des moyens de calcul de temps de retard (12) pour calculer, lorsque ledit dispositif d'affichage d'images affiche un premier objet d'affichage défini de manière à générer des sons, un temps de retard sur la base d'une direction vers le premier objet d'affichage tel que visionné à partir de la position d'une caméra virtuelle ou d'un caractère,
des moyens de traitement audio (12) pour lire les données de source sonore correspondant audit premier objet d'affichage à partir desdits moyens de mémorisation de données de source sonore pour chaque temps unitaire, mémoriser les données de source sonore dans lesdits moyens de mémorisation temporaire et lire les données de source sonore en tant que premières données de source sonore, et lire les données de source sonore mémorisées dans les moyens de mémorisation temporaire en tant que secondes données de source sonore à un instant retardé du temps de retard calculé par lesdits moyens de calcul de temps de retard à partir de l'instant auquel lesdites premières données de source sonore sont lues,
des premiers moyens de conversion numérique/analogique (16a ou 16b) pour convertir les premières données de source sonore lues à partir desdits moyens de mémorisation temporaire en un signal audio analogique et acheminer le signal audio analogique auxdits premiers moyens de génération de sons, et
des seconds moyens de conversion numérique/analogique (16b ou 16a) pour convertir les secondes données de source sonore lues à partir desdits moyens de mémorisation temporaire en un signal audio analogique et acheminer le signal audio analogique auxdits seconds moyens de génération de sons,
**caractérisé en ce que** lesdits moyens de traitement audio (12) comportent des moyens de commande de volume sonore (12a) pour commander individuellement des volumes sonores desdits premier et second sons générés par lesdits premiers et seconds moyens de génération de sons (42L, 42R) et atténuer des plages de commande desdits premier et second volumes sonores en une plage plus réduite qu'une plage maximale à partir d'un volume sonore minimal à un volume sonore maximal sur la base d'une direction vers le premier objet d'affichage tel que visionné à partir d'une position de ladite caméra virtuelle ou dudit caractère.

2. Générateur de sons selon la revendication 1, dans lequel
lesdits moyens de commande de volume sonore (12a) sont de plus adaptés pour commander individuellement les volumes sonores desdits premier et second sons sur la base de la distance entre ledit premier objet d'affichage et ladite caméra virtuelle.

3. Générateur de sons selon la revendication 2, dans lequel
lesdits moyens de commande de volume sonore (12a) commandent les volumes sonores respectifs desdits premier et second sons de manière à être inversement proportionnels à un coefficient prédéterminé fois la distance entre ledit premier objet d'affichage et ladite caméra virtuelle.

4. Générateur de sons selon l'une quelconque des revendications 1 à 3, dans lequel
lesdits moyens de commande de volume sonore (12a) atténuent les plages de commande desdits volumes sonores de manière inversement proportionnelle à un coefficient prédéterminé fois la distance entre ledit premier objet d'affichage et ladite caméra virtuelle.

5. Générateur de sons selon la revendication 1, dans lequel
on fournit un contrôleur en relation avec ledit dispositif d'affichage d'images, et une position d'affichage du caractère est changée en réponse à un actionnement dudit contrôleur par un joueur et la ligne de visée de ladite caméra virtuelle est déplacée en synchronisation avec un mouvement du caractère, et
lesdits moyens de calcul de temps de retard sont adaptés pour calculer le temps de retard sur la base d'une direction vers ledit premier objet d'affichage tel que visionné à partir du caractère lorsque ledit dispositif d'affichage d'images affiche le caractère en plus dudit premier objet d'affichage.

6. Générateur de sons selon la revendication 5, dans lequel
lesdits moyens de commande de volume sonore (12a) servent à commander individuellement les volumes sonores desdits premier et second sons sur la base de la distance entre ledit premier objet d'affichage et ledit caractère.

7. Générateur de sons selon la revendication 5 ou 6, dans lequel
lesdits moyens de commande de volume sonore (12a) commandent les volumes sonores respectifs desdits premier et second sons de manière à être inversement proportionnels à un coefficient prédéterminé fois la distance entre ledit premier objet d'affichage et ledit caractère.

8. Générateur de sons selon l'une quelconque des revendications 5 à 7, dans lequel
lesdits moyens de commande de volume sonore (12a) atténuent les plages de commande des volumes sonores de manière inversement proportionnelle à un coefficient prédéterminé fois la distance entre ledit premier objet d'affichage et ledit caractère.

9. Générateur de sons selon la revendication 1, dans lequel lesdits moyens de mémorisation temporaire comportent
des premiers moyens de mémorisation temporaire (15a) capables de mémoriser les données de source sonore lues pour chaque temps unitaire à partir desdits moyens de mémorisation de données de source sonore, et ayant une capacité pour mémoriser la quantité des données de source sonore qui correspond au moins au temps unitaire, et
des seconds moyens de mémorisation temporaire (15b) capables de mémoriser les données de source sonore lues pour chaque temps unitaire à partir desdits moyens de mémorisation de données de source sonore (22), et ayant une capacité pour mémoriser la quantité des données de source sonore qui est plus grande d'une quantité correspondant à un temps de retard maximal prédéterminé à celle mémorisée dans les moyens de mémorisation temporaire (15a), et lesdits moyens de traitement audio (12) comportent
l'écriture des données de source sonore lues à partir desdits moyens de mémorisation de données de source sonore (22) pour chaque temps unitaire dans lesdits premiers moyens de mémorisation temporaire (15a), et ensuite la lecture des données de source sonore écrites en tant que premières données sonores, et
l'écriture des données de source sonore lues à partir desdits moyens de mémorisation de données de source sonore (22) pour chaque temps unitaire dans lesdits seconds moyens de mémorisation temporaire (15b) à une adresse d'écriture changée en fonction du temps de retard calculé par lesdits moyens de calcul de temps de retard, et ensuite la lecture des données de source sonore écrites en tant que secondes données de source sonore, pour retarder les secondes données de source sonore par rapport aux premières données de source sonore d'un temps voulu dans la plage dudit temps de retard maximal.

10. Générateur de sons selon la revendication 1, dans lequel lesdits moyens de mémorisation temporaire comportent
des premiers moyens de mémorisation temporaire (15a) capables de mémoriser les données de source sonore lues pour chaque temps unitaire à partir desdits moyens de mémorisation de données de source sonore, et ayant une capacité pour mémoriser la quantité des données de source sonore qui correspond au moins au temps unitaire, et
des seconds moyens de mémorisation temporaire (15b) capables de mémoriser les données de source sonore lues à partir desdits premiers moyens de mémorisation temporaire (15a), et ayant une capacité pour mémoriser la quantité des données de source sonore qui correspond à un temps de retard maximal prédéterminé, et lesdits moyens de traitement audio (12) comportent
l'écriture des données de source sonore lues à partir desdits moyens de mémorisation de données de source sonore (22) pour chaque temps unitaire dans lesdits premiers moyens de mémorisation temporaire (15a), et ensuite la lecture des données de source sonore écrites en tant que premières données de source sonore, et
l'écriture des premières données de source sonore lues à partir desdits premiers moyens de mémorisation temporaire (15a) dans lesdits seconds moyens de mémorisation temporaire (15b), et ensuite la lecture des premières données de source sonore en tant que secondes données de source sonore à une adresse de lecture changée en fonction du temps de retard calculé par lesdits moyens de calcul de temps de retard, pour retarder les secondes données de source sonore par rapport aux premières données de source sonore d'un temps voulu dans la plage dudit temps de retard maximal.
